# EUROPÄISCHE PATENTSCHRIFT

(11) **EP 3 945 952 B1**
(45) Veröffentlichungstag und Bekanntmachung des Hinweises auf die Patenterteilung: **21.09.2022**
(21) Anmeldenummer: 20833759.2
(22) Anmeldetag: 15.12.2020
(51) Int. Cl.: A47J 27/09

(54) **DAMPFKOCHTOPF**
PRESSURE COOKER
AUTOCUISEUR

(30) Priorität: 08.01.2020 DE 102020200156
(43) Veröffentlichungstag der Anmeldung: 09.02.2022
(73) Patentinhaber: WMF GmbH, 73312 Geislingen/Steige (DE)
(72) Erfinder: MORMONE, Maria, 73329 Kuchen (DE); REINHARD, Dieter, 73326 Deggingen (DE)
(74) Vertreter: Pfenning, Meinig & Partner mbB
(86) Internationale Anmeldenummer: PCT/EP2020/086103
(87) Internationale Veröffentlichungsnummer: WO 2021/139969

(56) Entgegenhaltungen:
- EP-A2- 1 884 179
- DE-A1- 2 917 201
- DE-U1- 29 518 107
- US-A- 4 423 825

## Beschreibung

Es wird ein Dampfkochtopf bereitgestellt, bei dem ein elastisches Dichtelement des Griffs bei einer Befestigung des Griffs am Deckel über dem Abdampfloch angeordnet ist. Ferner enthält der Dampfkochtopf eine Drehwelle, die oberhalb des elastischen Dichtelements im Griff angeordnet ist und in diesem Bereich einen Abschnitt mit einem nicht-runden Querschnitt aufweist, wobei dieser Abschnitt dazu geeignet ist, eine mechanische Kraft auf das elastische Dichtelement auszuüben. Der Dampfkochtopf ist dadurch gekennzeichnet, dass das elastische Dichtelement eine Dichtlippe aufweist, die bei einer Befestigung des Griffs am Deckel seitlich um das Abdampfloch herum auf dem Deckel zum liegen kommt, wobei eine fluidische Verbindung von dem Abdampfloch in einen Zwischenraum zwischen dem Deckel und dem Griffboden lediglich durch mindestens eine Öffnung in der Dichtlippe bereitgestellt ist. Der Dampfkochtopf ermöglicht somit ein sanftes Abdampfen und ist mit geringen Ausfallzeiten und niedrigeren Kosten produzierbar.

Dampfkochtöpfe mit einem kleinen Abdampfloch, das in einem gewölbten Deckel angeordnet ist, sind aus dem Stand der Technik bekannt (siehe z.B. EP 1 884 179 A2). Zur Herstellung dieser Dampfkochtöpfe muss das kleine Abdampfloch aus einer gewölbten Region des Deckels (d.h. aus einer Kugelfläche) gestanzt werden. Dieses Vorgehen ist mit dem Problem verbunden, dass das Stanzwerkzeug regelmäßig Instand gesetzt werden muss, was mit langen Ausfallzeiten und hohen Kosten verbunden ist. Die Produktionsfähigkeit solcher Dampfkochtöpfe somit gering und als dauerhafte Lösung unakzeptabel.

Zur Vermeidung der Probleme wurde eine Vergrößerung des Stanzloches (z.B. auf einen Durchmesser von ursprünglich 2 mm auf ≥ 2,4 mm) vorgeschlagen, da dieses bei gewölbten Oberflächen dem Stanzwerkzeug weniger Probleme bereitet und Instandsetzungen seltener wären. Diese Maßnahme hat jedoch den Nachteil, dass sich die Dampfmenge vergrößert, die pro Zeiteinheit durch das kleine Abdampfloch entweichen kann. Anders ausgedrückt wird durch diese Maßnahme das Abdampfen aus dem Dampfkochtopf verstärkt wird und kann streng genommen nicht mehr als "sanftes Abdampfen" gewertet werden. Die Folge können Veränderungen der Konsistenz der im Dampfkochtopf befindlichen Lebensmittel sein, die durch eine zu schnelle Druckreduzierung bewirkt wird.

Ausgehend hiervon war es die Aufgabe der vorliegenden Erfindung, einen Dampfkochtopf bereitzustellen, der die im Stand der Technik bekannten Nachteile nicht mehr aufweist. Insbesondere sollte der Dampfkochtopf mit geringeren Ausfallzeiten und Kosten produzierbar sein ohne dabei seine Eigenschaft zu verlieren, einen geringen Dampfaustritt pro Zeiteinheit, d.h. ein sog. "sanftes Abdampfen", zu ermöglichen.

Die Aufgabe wird gelöst durch den Dampfkochtopf mit den Merkmalen von Anspruch 1. Die abhängigen Ansprüche zeigen vorteilhafte Weiterbildungen auf.

Erfindungsgemäß wird ein Dampfkochtopf bereitgestellt, enthaltend
a) einen Topf;
b) einen Deckel, der reversibel am Topf befestigbar ist und der mindestens ein Abdampfloch zum Ablassen von Dampf aus dem Topf aufweist;
c) einen Griff, der reversibel am Deckel befestigbar ist und der einen Griffboden mit einem Loch aufweist,
d) ein elastisches Dichtelement, das in dem Loch des Griffbodens angeordnet ist und dieses dampfdicht verschließt, wobei der Griff so ausgestaltet ist, dass das elastische Dichtelement bei einer Befestigung des Griffs am Deckel über dem Abdampfloch angeordnet ist; und
e) eine Drehwelle, die oberhalb des elastischen Dichtelements im Griff angeordnet ist und in diesem Bereich einen Abschnitt mit einem nicht-runden Querschnitt aufweist, wobei dieser Abschnitt dazu geeignet ist, eine mechanische Kraft auf das elastische Dichtelement auszuüben;
dadurch gekennzeichnet, dass das elastische Dichtelement eine Dichtlippe aufweist, die bei einer Befestigung des Griffs am Deckel seitlich um das Abdampfloch herum auf dem Deckel zum liegen kommt, wobei eine fluidische Verbindung von dem Abdampfloch in einen Zwischenraum zwischen dem Deckel und dem Griffboden lediglich durch mindestens eine Öffnung in der Dichtlippe bereitgestellt ist.

Die Dichtlippe des elastischen Elements des Dampfkochtopfes bildet eine Zwischenkammer, durch deren mindestens einen Öffnung der Grad des Dampfaustritts festgelegt werden kann. Dampf strömt also zunächst vom Topf über das Abdampfloch in eine Zwischenkammer, welche durch die umlaufende Dichtlippe begrenzt ist, und kann nur noch über die mindestens eine Öffnung an der Dichtlippe in den Zwischenraum zwischen Deckel und Deckelgriffboden entweichen. Folglich ist, unabhängig von dem Durchmesser des Abdampfloches, ein "sanftes Abdampfen" gewährleistet. Der Durchmesser des Abdampfloches kann daher größer ausgestaltet werden als bei Dampfkochtöpfen aus dem Stand der Technik üblich während zudem sichergestellt werden, dass nur eine geringe Menge Dampf pro Zeiteinheit aus dem Dampfkochtopf freigelassen wird, also ein sog. "sanften Abdampfen" erhalten bleibt. Anders ausgedrückt kann ein sanftes Abdampfen auch bei größeren Abdampfloch-Bohrungen bereitgestellt werden, wodurch die Herstellung des sanft abdampfenden Dampfkochtopfes mit geringeren Ausfallzeiten und niedrigeren Kosten als bei bekannten Dampfkochtöpfen ermöglicht wird.

Bei der mindestens einen Öffnung kann es sich natürlich auch um mehrere Öffnungen handeln.

Der Dampfkochtopf kann dadurch gekennzeichnet sein, dass das mindestens eine Abdampfloch einen Durchmesser im Bereich von ≥ 2,4 mm, bevorzugt ≥ 2,6 mm, optional ≥ 3,0 mm oder ≥ 4,0 mm, aufweist. Durchmesser in dieser Größenordnung sind vorteilhaft, da sie weniger Instandsetzungsarbeiten am Stanzgerät und weniger Ausfallzeiten bei der Produktion des Dampfkochtopfs hervorrufen.

Ferner kann das mindestens eine Abdampfloch eine Öffnungsfläche im Bereich von ≥ 4,5 mm², bevorzugt 5,3 mm², optional ≥ 7,1 mm² oder 12,6 mm². Diese Öffnungsfläche ist größer als eine im Stand der Technik übliche Öffnungsfläche von ca. 3,2 mm² (runde Öffnung mit d = 2 mm). Der Dampfaustrittsgrad durch diese Öffnungsfläche ist somit höher als bei der im Stand der Technik üblichen Öffnungsfläche. Der Grad des Dampfaustritts aus dem Dampfkochtopf kann jedoch durch die Dichtungslippe des elastischen Elements mit ihrer mindestens einen Öffnung auf ein gewünschtes Maß reduziert werden.

Der Abschnitt der Drehwelle mit dem nicht-runden Querschnitt kann mindestens einen Nocken enthalten, der besonders bevorzugt eine Ausdehnung in einer Richtung radial von der Achse der Drehwelle weg aufweist, die 110 bis 190%, bevorzugt 120 bis 180%, besonders bevorzugt 130 bis 170 %, ganz besonders bevorzugt 140 bis 160 %, der Ausdehnung eines runden Querschnitts in diesem Bereich entspricht. Anders ausgedrückt ist der Radius des mindestens einen Nocken im angegebenen Bereich länger als der Radius von diesem Abschnitt der Drehwelle an einer Stelle ohne Nocken. Diese Ausdehnung des Nockens bewirkt eine sehr hohe Druckkraft auf das elastische Dichtelement in Richtung Abdampfloch, sodass auch bei hohen Drücken im Topf des Dampfkochtopfes ein sicheres und dampfdichtes Verschließen des Topfes sichergestellt werden kann.

Ferner kann der Abschnitt der Drehwelle mit dem nicht-runden Querschnitt mindestens zwei Nocken enthalten, die bevorzugt jeweils eine Ausdehnung in einer Richtung radial von der Achse der Drehwelle weg aufweisen, die 110 bis 190%, bevorzugt 120 bis 180%, besonders bevorzugt 130 bis 170 %, ganz besonders bevorzugt 140 bis 160 %, der Ausdehnung eines runden Querschnitts in diesem Bereich entspricht. Die Ausdehnung der zwei Nocken kann identisch oder verschieden sein. Eine verschieden lange Ausdehnung bewirkt, dass von den beiden Nocken ein unterschiedlich hoher Druck auf das elastische Dichtelement ausgeübt wird und somit ein unterschiedlich hoher Schwellenwert für den Dampfdruck bewirkt, dass Dampf aus dem Topf des Dampfkochtopfes über das elastische Dichtelement entweichen kann. Es können somit über die zwei Nocken der Drehwelle zwei verschiedene Dampfkochdrücke eingestellt werden.

Die mindestens zwei Nocken können in einer Ebene senkrecht zur Achse der Drehwelle eine Anordnung zueinander in einem Winkel von 80° bis 180°, bevorzugt 110° bis 170°, besonders bevorzugt 140° bis 160°, stehen. Dies bewirkt verglichen mit einem engeren Winkel, dass die Drehwelle stärker gedreht werden muss, um von der Position des ersten Nockens auf die Position des zweiten Nockens zu gelangen. Dies erlaubt eine feinere Einstellung von Zwischenpositionen zwischen den beiden Nocken.

Der Abschnitt mit dem nicht-runden Querschnitt kann mindestens eine Nocken-freien Sektor enthalten, der eine Ausdehnung in einer Richtung radial von der Achse der Drehwelle weg aufweist, die mehr als die Ausdehnung eines runden Querschnitts in diesem Bereich entspricht und weniger als die Ausdehnung von dem längsten Nocken in diesem Abschnitt entspricht. Der mindestens eine Nocken-freie Sektor ist bevorzugt zwischen zwei Nocken angeordnet, wobei die Ausdehnung in einer Richtung zwischen die zwei Nocken abnimmt, insbesondere bis zu einem Mittelpunkt zwischen den zwei Nocken. Vorteil hierbei ist, dass über den Bereich zwischen den beiden Nocken eine Druckkraft auf das elastische Dichtelement ausgeübt werden kann, die sich zwischen einer Druckkraft von Null (am Mittelpunkt zwischen den beiden Nocken) und der höchsten Druckkraft (Spitze des längsten der beiden Nocken) bewegen kann. Es kann somit über die Drehung der Drehwelle die Druckkraft auf das elastische Element stufenlos oder stufenweise (je nach Ausgestaltung dieses Sektors) erhöht bzw. erniedrigt werden.

Die Drehwelle ist bevorzugt mit einem Bedienelement verbunden, über welches die Drehwelle in mindestens drei diskreten Stufen drehbar ist. In einer Abdampfstufe (Stufe 0) wird bevorzugt von dem nicht-runden Abschnitt der Drehwelle keine mechanische Kraft auf das elastische Dichtelement ausgeübt. In dieser Abdampfstufe kann ein Nocken-freier Sektor am nicht-runden Querschnitt der Drehwelle in Richtung elastisches Dichtelement zeigen und dieses ggf. druckfrei kontaktieren. In einer ersten Druckstufe (Kochstufe 1) wird bevorzugt von dem nicht-runden Abschnitt der Drehwelle eine geringe mechanische Kraft auf das elastische Dichtelement ausgeübt. In dieser ersten Druckstufe kann ein erster, niedriger Nocken am nicht-runden Querschnitt der Drehwelle auf das elastische Dichtelement drücken. In einer zweiten Druckstufe (Kochstufe 2) wird bevorzugt von dem nicht-runden Abschnitt der Drehwelle eine hohe mechanische Kraft auf das elastische Dichtelement ausgeübt. In dieser zweiten Druckstufe kann ein zweiter, hoher Nocken am nicht-runden Querschnitt der Drehwelle auf das elastische Dichtelement drücken. Solange ein Druck im Schnellkochtopf anliegt und eine Kochstufe 1 oder 2 eingestellt ist, wird das elastische Dichtelement durch einen Nocken niedergehalten und verschließt das Abdampfloch im Deckel dampfdicht. Über die Kochstufe 0 wird durch "wegnehmen" des Nockens das Abdampfloch im Deckel durch den Dampfdruck im Topf geöffnet (Rückfederung des elastischen Dichtelements) und es kann Dampf in begrenzter Menge entweichen, das sogenannte "sanfte Abdampfen".

Die Drehwelle kann geradlinig sein. Ferner kann die Drehwelle biegsam sein. Abgesehen davon kann die Drehwelle mit einer oder mehreren flexiblen Stelle(n) versehen sein.

Der Abstand einer Achse der Drehwelle zu einer Oberseite des elastischen Dichtelements kann dem Radius des nicht-runden Abschnitts der Drehwelle an einer Stelle ohne Nocken entsprechen, oder nur maximal 2 mm, bevorzugt maximal 1,5 mm, besonders bevorzugt maximal 1,0 mm, insbesondere maximal 0,5 mm, länger als dieser Radius sein. Vorteil an dieser Ausgestaltungsform ist, dass der nicht-runde Abschnitt der Drehwelle in seinem Nocken-freien Bereich einen geringen bzw. keinen Abstand zum elastischen Dichtelement aufweist, wodurch eine "Spiel"-lose Regelung der Biegung des elastischen Elements über den/die Nocken des nicht-runden Abschnitts der Drehwelle möglich ist. Zudem kann im Falle eines Druckaufbaus im Topf und in dem durch die Dichtlippe begrenzten Zwischenraum durch den geringen Abstand zur Drehwelle die Dichtlippe der elastischen Membran nicht vom Deckel abgehoben werden und damit nicht undicht werden. Die Drehwelle stellt somit auch an der Stelle ohne Nocken unmittelbar einen Gegendruck bereit, der einem Abheben der Dichtlippe entgegen wirkt.

Das elastische Dichtelement kann ein Material enthalten oder daraus besteht, das ausgewählt ist aus der Gruppe bestehend aus Elastomere.

In einer bevorzugten Ausgestaltungsform weist das elastische Dichtelement an einer Fläche senkrecht zum Griffboden eine Nut auf, bevorzugt eine umlaufende Nut, wobei besonders bevorzugt der Griffboden in die Nut eingreift und das elastische Dichtelement in der mindestens einen Öffnung des Griffbodens fixiert. Vorteil an dieser Ausgestaltungsform ist eine sichere und dampfdichte Fixierung des elastischen Elements am Deckelgriff.

Das elastische Dichtelement kann in einem Bereich zwischen einer Mittelachse des elastischen Dichtelements und der Dichtlippe eine Ausnehmung, bevorzugt eine umgehende Ausnehmung, aufweisen. Der Vorteil hierbei ist, dass durch die Ausnehmung ein großer Zwischenraum als Puffer entsteht, in welchem sich der durch das Abdampfloch austretende Dampf sammeln kann, bevor er durch die mindestens eine Öffnung in der Dichtlippe austritt. Das Abdampfen kann dadurch gleichmäßiger erfolgen.

Das elastische Dichtelement kann ohne die Dichtlippe in einer Richtung parallel zum Griffboden eine Ausdehnung im Bereich von 1 bis 4 cm aufweisen.

Ferner kann das elastische Dichtelement ohne die Dichtlippe in einer Richtung senkrecht zum Griffboden eine Ausdehnung im Bereich von 10 bis 15 mm aufweisen.

Die Dichtlippe kann in einer Richtung parallel zum Griffboden eine Ausdehnung im Bereich von 2 bis 6 cm aufweisen.

Ferner kann die Dichtlippe in einer Richtung senkrecht zum Griffboden eine Ausdehnung im Bereich von 10 bis 18 mm aufweisen.

Abgesehen davon kann sich die Dichtlippe zumindest bereichsweise in eine Richtung hin zu einer Mittelachse des elastischen Elements erstrecken. Zudem kann sich die Dichtlippe zumindest bereichsweise weg von einer Mittelachse des elastischen Elements erstrecken. Ferner kann sich die Dichtlippe zumindest bereichsweise in einer Richtung parallel zur Mittelachse des elastischen Elements erstrecken.

Die Dichtlippe kann ein Material enthalten oder daraus bestehen, das ausgewählt ist aus der Gruppe bestehend aus Elastomere.

Ferner kann die Dichtlippe monolithisch zum elastischen Dichtelement sein. Vorteil hierbei ist die höhere Stabilität gegenüber Dichtlippen, die mit dem elastischen Dichtelement auf andere Art und Weise verbunden sind.

Die mindestens eine Öffnung der Dichtlippe, bevorzugt alle Öffnungen der Dichtlippe, können eine Öffnungsfläche im Bereich von 2 bis <7,5 mm², bevorzugt von 4 bis ≤ 7,2 mm², besonders bevorzugt von 5 bis ≤ 7,0 mm², ganz besonders bevorzugt von 5,5 bis 6,8 mm², insbesondere von 6,0 bis 6,6 mm² bis 6,2 bis 6,4 mm², aufweisen. Vorteil hierbei ist, dass diese Öffnungsfläche der Öffnungsfläche eines runden Abdampflochs entspricht, das einen Durchmesser von 2 mm aufweist.

In einer bevorzugten Ausgestaltungsform stellt die Dichtlippe über die mindestens eine Öffnung einen so großen Ausströmwiderstand bereit, dass es eine Zeit von mindestens 10 sek., bevorzugt mindestens 20 sek., besonders bevorzugt mindestens 30 sek., ganz besonders bevorzugt mindestens 40 sek., insbesondere mindestens 50 sek., benötigt, um einen Druck von 1 bar Überdruck auf 0,04 bar Überdruck im Dampfkochtopf abfallen zu lassen.

Ferner kann die Dichtlippe über die mindestens eine Öffnung einen so großen Ausströmwiderstand bereitstellen, dass es eine Zeit von maximal 2 min., bevorzugt maximal 1,75 min., besonders bevorzugt maximal 1,50 min., ganz besonders bevorzugt maximal 1,25 min., insbesondere maximal 1 min, benötigt, um einen Druck von 1 bar Überdruck auf 0,04 bar Überdruck im Dampfkochtopf abfallen zu lassen.

Anhand der nachfolgenden Figuren soll der erfindungsgemäße Gegenstand näher erläutert werden, ohne diesen auf die hier dargestellten, spezifischen Ausführungsformen einschränken zu wollen.

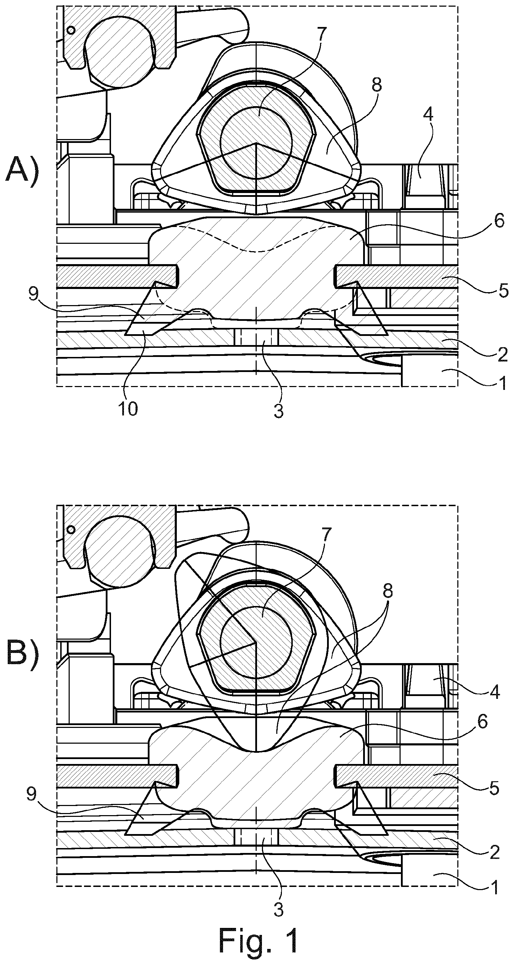

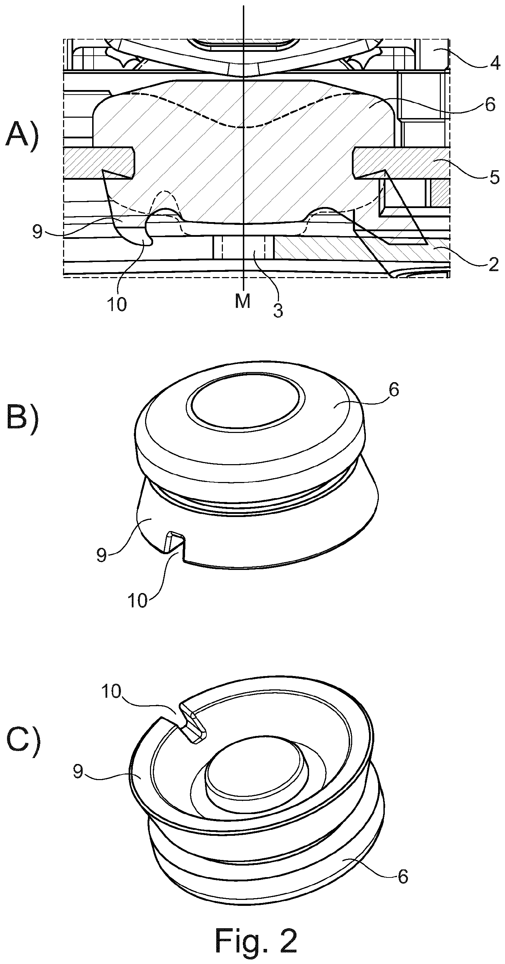

Figur 1A und B zeigen schematisch einen Ausschnitt eines erfindungsgemäßen Dampfkochtopfes. Der Topf 1 ist als Raum unter dem Deckel 2 illustriert. Der Deckel 2 ist reversibel am Topf 1 befestigbar ist und weist ein Abdampfloch 3 zum Ablassen von Dampf aus dem Topf 1 auf. Der Deckel 2 hat einen Griff 4, der reversibel am Deckel 2 befestigbar ist und der einen Griffboden 5 mit einem Loch aufweist. In dem Loch des Griffbodens 5 ist ein elastisches Dichtelement 6 angeordnet, wobei das elastische Dichtelement 6 das Loch dampfdicht verschließt. Der Griff 4 ist so ausgestaltet, dass das elastische Dichtelement 6 bei einer Befestigung des Griffs 4 am Deckel 2 über dem Abdampfloch 3 angeordnet ist. Ferner enthält der Dampfkochtopf eine Drehwelle 7, die oberhalb des elastischen Dichtelements 6 im Griff 4 angeordnet ist und in diesem Bereich einen Abschnitt mit einem nicht-runden Querschnitt 8 (hier bewirkt durch zwei Nocken auf der Drehwelle 7) aufweist, wobei dieser Abschnitt dazu geeignet ist, eine mechanische Kraft auf das elastische Dichtelement 6 auszuüben. Der Dampfkochtopf ist dadurch gekennzeichnet, dass das elastische Dichtelement 6 eine Dichtlippe 9 aufweist, die bei einer Befestigung des Griffs 4 am Deckel 2 seitlich um das Abdampfloch 3 herum auf dem Deckel 2 zum Liegen kommt, wobei eine fluidische Verbindung von dem Abdampfloch 3 in einen Zwischenraum zwischen dem Deckel 2 und dem Griffboden 5 lediglich durch mindestens eine Öffnung 10 in der Dichtlippe 9 bereitgestellt ist. In Figur 1A ist der Zustand dargestellt, in dem von dem nicht-runden Querschnitt 8 der Drehwelle 7 kein mechanischer Druck auf das elastische Dichtelement ausgeübt wird, da der nicht-runde Querschnitt von dem elastischen Dichtelement 6 weggedreht ist. In Figur 1B ist der Zustand dargestellt, in dem von dem nicht-runden Querschnitt 8 der Drehwelle 7 ein mechanischer Druck auf das elastische Dichtelement ausgeübt wird, da der nicht-runde Querschnitt zu dem elastischen Dichtelement 6 hingedreht ist und darauf eine Druckkraft ausübt. In Figur 2 ist nur noch der Umriss der Dichtlippe 9 angedeutet.

Figur 2 zeigt schematisch verschiedene Ausgestaltungsformen von einem elastischen Dichtelement des Dampfkochtopfes. In Figur 2A ist im Loch des Griffbodens 5 vom Griff 4 ein elastisches Dichtelement 6 angeordnet, das eine abschnittsweise unterschiedliche Dichtlippe 9 mit einer Öffnung 10 aufweist. Links in der Figur 2A ist die Dichtlippe 9 abschnittsweise in Richtung einer Mittelachse M des elastischen Dichtelements 6 ausgerichtet und rechts in der Figur 2A ist die Dichtlippe abschnittsweise in Richtung weg von einer Mittelachse M des elastischen Dichtelements 6 ausgerichtet. Die Figur 2B zeigt ein elastisches Dichtelement 6 mit seiner Dichtlippe 9 und Öffnung 10 von schräg oben. Die Figur 2C zeigt ein elastisches Dichtelement 6 mit seiner Dichtlippe 9 und Öffnung 10 von schräg unten.

### Bezugszeichenliste

- 1:: Topf;
- 2:: Deckel;
- 3:: Abdampfloch;
- 4:: Griff;
- 5:: Griffboden;
- 6:: elastisches Dichtelement;
- 7:: Drehwelle;
- 8:: Abschnitt mit nicht-rundem Querschnitt (z.B. Nocken)
- 9:: Dichtlippe;
- 10:: mindestens eine Öffnung in der Dichtlippe;
- M:: Mittelachse des elastischen Dichtelements.

## Patentansprüche

1. Dampfkochtopf enthaltend
a) einen Topf; (1) b) einen Deckel, (2) der reversibel am Topf befestigbar ist und der mindestens ein Abdampfloch (3) zum Ablassen von Dampf aus dem Topf aufweist;
c) einen Griff, (4) der reversibel am Deckel befestigbar ist und der einen Griffboden (5) mit einem Loch aufweist,
d) ein elastisches Dichtelement (6) das in dem Loch des Griffbodens angeordnet ist und dieses dampfdicht verschließt, wobei der Griff so ausgestaltet ist, dass das elastische Dichtelement bei einer Befestigung des Griffs am Deckel über dem Abdampfloch angeordnet ist; und
e) eine Drehwelle, die oberhalb des elastischen Dichtelements im Griff angeordnet ist und in diesem Bereich einen Abschnitt mit einem nicht-runden Querschnitt aufweist, wobei dieser Abschnitt dazu geeignet ist, eine mechanische Kraft auf das elastische Dichtelement auszuüben;
**dadurch gekennzeichnet, dass** das elastische Dichtelement eine Dichtlippe aufweist, die bei einer Befestigung des Griffs am Deckel seitlich um das Abdampfloch herum auf dem Deckel zum Liegen kommt, wobei eine fluidische Verbindung von dem Abdampfloch in einen Zwischenraum zwischen dem Deckel und dem Griffboden lediglich durch mindestens eine Öffnung in der Dichtlippe bereitgestellt ist.

2. Dampfkochtopf nach einem der vorhergehenden Ansprüche, **dadurch gekennzeichnet, dass** das mindestens eine Abdampfloch (3)
i) einen Durchmesser im Bereich von ≥ 2,4 mm, bevorzugt ≥ 2,6 mm, optional ≥ 3,0 mm oder ≥ 4,0 mm, aufweist; und/oder
ii) eine Öffnungsfläche im Bereich von ≥ 4,5 mm², bevorzugt 5,3 mm², optional ≥ 7,1 mm² oder 12,6 mm².

3. Dampfkochtopf nach einem der vorhergehenden Ansprüche, **dadurch gekennzeichnet, dass** der Abschnitt mit dem nicht-runden Querschnitt (8)
i) mindestens einen Nocken enthält, der besonders bevorzugt eine Ausdehnung in einer Richtung radial von der Achse der Drehwelle weg aufweist, die 110 bis 190%, bevorzugt 120 bis 180%, besonders bevorzugt 130 bis 170 %, ganz besonders bevorzugt 140 bis 160 %, der Ausdehnung eines runden Querschnitts in diesem Bereich entspricht; und/oder
ii) mindestens zwei Nocken enthält, die bevorzugt jeweils eine Ausdehnung in einer Richtung radial von der Achse der Drehwelle weg aufweisen, die 110 bis 190%, bevorzugt 120 bis 180%, besonders bevorzugt 130 bis 170 %, ganz besonders bevorzugt 140 bis 160 %, der Ausdehnung eines runden Querschnitts in diesem Bereich entspricht, und/oder in einer Ebene senkrecht zur Achse der Drehwelle eine Anordnung zueinander in einem Winkel von 120° bis 180°, bevorzugt 130° bis 170°, besonders bevorzugt 140° bis 160°, stehen; und/oder
iii) mindestens eine Nocken-freien Sektor enthält, der eine Ausdehnung in einer Richtung radial von der Achse der Drehwelle weg aufweist, die mehr als die Ausdehnung eines runden Querschnitts in diesem Bereich entspricht und weniger als die Ausdehnung von dem längsten Nocken in diesem Abschnitt entspricht, wobei der mindestens eine Nocken-freie Sektor bevorzugt zwischen zwei Nocken angeordnet ist und die Ausdehnung in einer Richtung zwischen die zwei Nocken abnimmt, bevorzugt bis zu einem Mittelpunkt zwischen den zwei Nocken.

4. Dampfkochtopf nach einem der vorhergehenden Ansprüche, **dadurch gekennzeichnet, dass** die Drehwelle (7) mit einem Bedienelement verbunden ist, über welches die Drehwelle in mindestens drei diskreten Stufen drehbar ist, wobei bevorzugt
i) in einer ersten Stufe von dem nicht-runden Abschnitt der Drehwelle keine mechanische Kraft auf das elastische Dichtelement ausgeübt wird;
ii) in einer zweiten Stufe von dem nicht-runden Abschnitt der Drehwelle eine geringe mechanische Kraft auf das elastische Dichtelement ausgeübt wird; und
iii) in einer dritten Stufe von dem nicht-runden Abschnitt der Drehwelle eine hohe mechanische Kraft auf das elastische Dichtelement ausgeübt wird.

5. Dampfkochtopf nach einem der vorhergehenden Ansprüche, **dadurch gekennzeichnet, dass** die Drehwelle (7)
i) geradlinig ist; und/oder
ii) biegsam ist; und/oder
iii) mit einer oder mehreren flexiblen Stelle(n) versehen ist.

6. Dampfkochtopf nach einem der vorhergehenden Ansprüche, **dadurch gekennzeichnet, dass** der Abstand einer Zentralachse der Drehwelle (7) zu einer Oberseite des elastischen Dichtelements dem Radius des nicht-runden Abschnitts der Drehwelle an einer Stelle ohne Nocken entspricht, oder nur maximal 2 mm, bevorzugt maximal 1,5 mm, besonders bevorzugt maximal 1,0 mm, insbesondere maximal 0,5 mm, länger als dieser Radius ist.

7. Dampfkochtopf nach einem der vorhergehenden Ansprüche, **dadurch gekennzeichnet, dass** das elastische Dichtelement (6) ein Material enthält oder daraus besteht, das ausgewählt ist aus der Gruppe bestehend aus Elastomere.

8. Dampfkochtopf nach einem der vorhergehenden Ansprüche, **dadurch gekennzeichnet, dass** das elastische Dichtelement (6) an einer Fläche senkrecht zum Griffboden eine Nut aufweist, bevorzugt eine umlaufende Nut, wobei besonders bevorzugt der Griffboden in die Nut eingreift und das elastische Dichtelement in der mindestens einen Öffnung des Griffbodens fixiert.

9. Dampfkochtopf nach einem der vorhergehenden Ansprüche, **dadurch gekennzeichnet, dass** das elastische Dichtelement (6) in einem Bereich zwischen einer Mittelachse des elastischen Dichtelements und der Dichtlippe eine Ausnehmung, bevorzugt eine umgehende Ausnehmung aufweist.

10. Dampfkochtopf nach einem der vorhergehenden Ansprüche, **dadurch gekennzeichnet, dass** das elastische Dichtelement (6) ohne die Dichtlippe
i) in einer Richtung parallel zum Griffboden eine Ausdehnung im Bereich von 1 bis 4 cm aufweist; und/oder
ii) in einer Richtung senkrecht zum Griffboden eine Ausdehnung im Bereich von 10 bis 15 mm aufweist.

11. Dampfkochtopf nach einem der vorhergehenden Ansprüche, **dadurch gekennzeichnet, dass** die Dichtlippe
i) in einer Richtung parallel zum Griffboden (5) eine Ausdehnung im Bereich von 2 bis 6 cm aufweist; und/oder
ii) in einer Richtung senkrecht zum Griffboden eine Ausdehnung im Bereich von 10 bis 18 mm aufweist.

12. Dampfkochtopf nach einem der vorhergehenden Ansprüche, **dadurch gekennzeichnet, dass** sich die Dichtlippe (9) zumindest bereichsweise in eine Richtung
i) hin zu einer Mittelachse des elastischen Dichtelements erstreckt; und/oder
ii) weg von einer Mittelachse des elastischen Dichtelements erstreckt; und/oder
iii) parallel zu einer Mittelachse des elastischen Dichtelements erstreckt.

13. Dampfkochtopf nach einem der vorhergehenden Ansprüche, **dadurch gekennzeichnet, dass** die Dichtlippe (9)
i) ein Material enthält oder daraus besteht, das ausgewählt ist aus der Gruppe bestehend aus Elastomere; und/oder
ii) monolithisch zum elastischen Dichtelement ist.

14. Dampfkochtopf nach einem der vorhergehenden Ansprüche, **dadurch gekennzeichnet, dass** die mindestens eine Öffnung der Dichtlippe, (9) bevorzugt alle Öffnungen der Dichtlippe, eine Öffnungsfläche im Bereich von 2 bis <7,5 mm², bevorzugt von 4 bis ≤ 7,2 mm², besonders bevorzugt von 5 bis ≤ 7,0 mm², ganz besonders bevorzugt von 5,5 bis 6,8 mm², insbesondere von 6,0 bis 6,6 mm² bis 6,2 bis 6,4 mm².

15. Dampfkochtopf nach einem der vorhergehenden Ansprüche, **dadurch gekennzeichnet, dass** die Dichtlippe (9) über die mindestens eine Öffnung einen so großen Ausströmwiderstand bereitstellt, dass es eine Zeit von
i) mindestens 10 sek., bevorzugt mindestens 20 sek., besonders bevorzugt mindestens 30 sek., ganz besonders bevorzugt mindestens 40 sek., insbesondere mindestens 50 sek., benötigt, um einen Druck von 1 bar Überdruck auf 0,04 bar Überdruck im Dampfkochtopf abfallen zu lassen; und/oder
ii) maximal 2 min., bevorzugt maximal 1,75 min., besonders bevorzugt maximal 1,50 min., ganz besonders bevorzugt maximal 1,25 min., insbesondere maximal 1 min, benötigt, um einen Druck von 1 bar Überdruck auf 0,04 bar Überdruck im Dampfkochtopf abfallen zu lassen.

## Claims

1. A pressure cooker, comprising
a) a pot (1);
b) a lid (2) which can be reversibly attached to the pot and which has at least one vent hole (3) for venting steam from the pot;
c) a handle (4) which can be reversibly attached to the lid and which has a handle base (5) having a hole,
d) an elastic sealing element (6) which is arranged in the hole of the handle base and which closes said hole in a vapor-tight manner, the handle being designed such that the elastic sealing element is arranged over the vent hole when the handle is fastened to the lid; and
e) a rotary shaft being arranged above the elastic sealing element in the handle and having a section having a non-circular cross-section in this region, said section being suitable for exerting a mechanical force on the elastic sealing element;
**characterized in that** the elastic sealing element has a sealing lip which, when the handle is attached to the lid, comes to lie on the lid laterally around the vent hole, wherein a fluidic connection from the vent hole into an intermediate space between the lid and the handle base is provided only through at least one opening in the sealing lip.

2. The pressure cooker according to any one of the preceding claims, **characterized in that** the at least one vent hole (3)
i) has a diameter in the range of ≥ 2.4 mm, preferably ≥ 2.6 mm, optionally ≥ 3.0 mm or ≥ 4.0 mm; and/or
ii) an opening area in the range of ≥ 4.5 mm², preferably 5.3 mm², optionally ≥ 7.1 mm² or 12.6 mm².

3. The pressure cooker according to any one of the preceding claims, **characterized in that** the section having the non-round cross-section
i) comprises at least one cam, which more preferably has an extension in a direction radially away from the axis of the rotary shaft, which corresponds to 110 to 190%, preferably 120 to 180%, more preferably 130 to 170%, most preferably 140 to 160%, of the extension of a round cross-section in said region; and/or
ii) comprises at least two cams, which preferably each have an extension in a direction radially away from the axis of the rotary shaft, which corresponds to 110 to 190%, preferably 120 to 180%, particularly preferably 130 to 170%, very particularly preferably 140 to 160%, of the extension of a round cross-section in said region, and/or which are arranged in a plane perpendicular to the axis of the rotary shaft at an angle of 120° to 180°, preferably 130° to 170°, particularly preferably 140° to 160°, to each other; and/or
iii) comprises at least one cam-free sector having an extension in a direction radially away from the axis of the rotary shaft which corresponds to more than the extension of a round cross-section in said region and less than the extension of the longest cam in said section, wherein the at least one cam-free sector is preferably arranged between two cams and the extension decreases in a direction between the two cams, preferably to a midpoint between the two cams.

4. The pressure cooker according to any one of the preceding claims, **characterized in that** the rotary shaft (7) is connected to an operating element, via which the rotary shaft can be rotated in at least three discrete stages, wherein preferably
i) in a first stage, no mechanical force is exerted on the elastic sealing element by the non-round section of the rotary shaft;
ii) in a second stage, a small mechanical force is exerted on the elastic sealing element by the non-round section of the rotary shaft; and
iii) in a third stage, a high mechanical force is exerted on the elastic sealing element by the non-round section of the rotary shaft.

5. The pressure cooker according to any one of the preceding claims, **characterized in that** the rotary shaft (7)
i) is rectilinear; and/or
ii) is pliable; and/or
iii) is provided with one or more flexible region(s).

6. The pressure cooker according to any one of the preceding claims, **characterized in that** the distance between a central axis of the rotary shaft and an upper side of the elastic sealing element corresponds to the radius of the non-round section of the rotary shaft at a regions without a cam, or is only at most 2 mm, preferably at most 1.5 mm, particularly preferably at most 1.0 mm, in particular at most 0.5 mm, longer than said radius.

7. The pressure cooker according to any one of the preceding claims, **characterized in that** the elastic sealing element (6) comprises or consists of a material selected from the group consisting of elastomers.

8. The pressure cooker according to any one of the preceding claims, **characterized in that** the elastic sealing element (6) has a groove at a surface perpendicular to the handle base, preferably a circumferential groove, wherein the handle base particularly preferably engages in the groove and fixes the elastic sealing element in the at least one opening of the handle base.

9. The pressure cooker according to any one of the preceding claims, **characterized in that** the elastic sealing element (6) has a recess, preferably a surrounding recess, in a region between a central axis of the elastic sealing element and the sealing lip.

10. The pressure cooker according to any one of the preceding claims, **characterized in that** the elastic sealing element (6) without the sealing lip
i) has an extension in the range of 1 to 4 cm in a direction parallel to the handle base; and/or
ii) has an extension in the range of 10 to 15 mm in a direction perpendicular to the handle base.

11. The pressure cooker according to any one of the preceding claims, **characterized in that** the sealing lip
i) has an extension in the range of 2 to 6 cm in a direction parallel to the handle base (5); and/or
ii) has an extension in the range of 10 to 18 mm in a direction perpendicular to the handle base.

12. The pressure cooker according to any one of the preceding claims, **characterized in that** the sealing lip (9), at least in regions, extends in one direction
i) toward a central axis of the elastic sealing element; and/or
ii) away from a central axis of the elastic sealing element; and/or
iii) parallel to a central axis of the elastic sealing element.

13. The pressure cooker according to any one of the preceding claims, **characterized in that** the sealing lip (9)
i) comprises or consists of a material selected from the group consisting of elastomers; and/or
ii) is monolithic to the elastic sealing element.

14. The pressure cooker according to any one of the preceding claims, **characterized in that** the at least one opening of the sealing lip (9), preferably all openings of the sealing lip, has an opening area in the range from 2 to < 7.5 mm², preferably from 4 to ≤ 7.2 mm², particularly preferably from 5 to ≤ 7.0 mm², very particularly preferably from 5.5 to 6.8 mm², in particular from 6.0 to 6.6 mm² to 6.2 to 6.4 mm².

15. The pressure cooker according to any one of the preceding claims, **characterized in that** the sealing lip (9), via the at least one opening, provides such a large outflow resistance that a time of
i) at least 10 seconds, preferably at least 20 seconds, particularly preferably at least 30 seconds, very particularly preferably at least 40 seconds, in particular at least 50 seconds, is required to cause a pressure to drop from 1 bar overpressure to 0.04 bar overpressure in the pressure cooker; and/or
ii) a maximum of 2 minutes, preferably a maximum of 1.75 minutes, particularly preferably a maximum of 1.50 minutes, very particularly preferably a maximum of 1.25 minutes, in particular a maximum of 1 minute, is required to cause a pressure to drop from 1 bar overpressure to 0.04 bar overpressure in the pressure cooker.

## Revendications

1. Autocuiseur contenant
a) un pot (1) ;
b) un couvercle (2) qui peut être fixé de manière réversible au pot et qui présente au moins un trou d'évacuation de vapeur (3) pour laisser s'échapper la vapeur du pot ;
c) une poignée, (4) qui peut être fixée de manière réversible au couvercle et qui présente un fond de poignée (5) avec un trou,
d) un élément d'étanchéité élastique (6) qui est disposé dans le trou du fond de poignée et ferme celui-ci de manière étanche à la vapeur, dans lequel la poignée est conçue de telle sorte que l'élément d'étanchéité élastique est disposé au-dessus du trou d'évacuation de vapeur lorsque la poignée est fixée au couvercle ; et
e) un arbre rotatif, qui est disposé au-dessus de l'élément d'étanchéité élastique dans la poignée et présente dans cette zone une partie avec une section transversale non ronde, dans lequel cette partie est adaptée pour exercer une force mécanique sur l'élément d'étanchéité élastique ;
**caractérisé en ce que** l'élément d'étanchéité élastique présente une lèvre d'étanchéité qui, lorsque la poignée est fixée au couvercle, vient se situer latéralement sur le couvercle autour du trou d'évacuation de vapeur, dans lequel une liaison fluidique depuis le trou d'évacuation de vapeur dans un espace intermédiaire entre le couvercle et le fond de poignée est fournie uniquement par au moins une ouverture dans la lèvre d'étanchéité.

2. Autocuiseur selon l'une quelconque des revendications précédentes, **caractérisé en ce que** le au moins un trou d'évacuation de vapeur (3)
i) présente un diamètre dans la plage ≥ 2,4 mm, de préférence ≥ 2,6 mm, optionnellement ≥ 3,0 mm ou ≥ 4,0 mm ; et/ou
ii) une surface d'ouverture dans la plage ≥ 4,5 mm², de préférence 5,3 mm², optionnellement ≥ 7,1 mm² ou 12,6 mm².

3. Autocuiseur selon l'une quelconque des revendications précédentes, **caractérisé en ce que** la partie avec la section transversale (8) non ronde
i) contient au moins une came qui de manière particulièrement préférée présente une extension dans une direction s'éloignant radialement de l'axe de l'arbre rotatif, qui correspond à 110 à 190 %, de préférence 120 à 180 %, de manière particulièrement préférée 130 à 170 %, mieux encore 140 à 160 %, de l'extension d'une section transversale ronde dans cette zone ; et/ou
ii) contient au moins deux cames, qui présentent de préférence respectivement une extension dans une direction s'éloignant radialement de l'axe de l'arbre rotatif, qui correspond à 110 à 190 %, de préférence 120 à 180 %, de manière particulièrement préférée 130 à 170 %, mieux encore 140 à 160 %, de l'extension d'une section transversale ronde dans cette zone, et/ou se tiennent dans un plan perpendiculaire à l'axe de l'arbre rotatif de manière disposée l'une par rapport à l'autre selon un angle de 120° à 180°, de préférence 130° à 170°, de manière particulièrement préférée 140° à 160° ; et/ou
iii) contient au moins un secteur sans came, qui présente une extension dans une direction s'éloignant radialement de l'axe de l'arbre rotatif qui correspond à plus que l'extension d'une section transversale ronde dans cette zone et correspond à moins que l'extension de la came la plus longue dans cette partie, dans lequel le au moins un secteur sans came est de préférence disposé entre deux cames et l'extension diminue dans une direction entre les deux cames, de préférence jusqu'à un point central entre les deux cames.

4. Autocuiseur selon l'une quelconque des revendications précédentes, **caractérisé en ce que** l'arbre rotatif (7) est relié à un élément de commande par l'intermédiaire duquel l'arbre rotatif peut être tourné en au moins trois étapes discrètes, dans lequel de préférence
i) dans une première étape, aucune force mécanique n'est exercée sur l'élément d'étanchéité élastique par la partie non ronde de l'arbre rotatif ;
ii) dans une deuxième étape, une faible force mécanique est exercée sur l'élément d'étanchéité élastique par la partie non ronde de l'arbre rotatif ; et
iii) dans une troisième étape, une force mécanique élevée est exercée sur l'élément d'étanchéité élastique par la partie non ronde de l'arbre rotatif.

5. Autocuiseur selon l'une quelconque des revendications précédentes, **caractérisé en ce que** l'arbre rotatif (7)
i) est rectiligne ; et/ou
ii) est flexible ; et/ou
iii) est pourvu d'un ou de plusieurs point(s) flexible(s).

6. Autocuiseur selon l'une quelconque des revendications précédentes, **caractérisé en ce que** la distance d'un axe central de l'arbre rotatif à une face supérieure de l'élément d'étanchéité élastique correspond au rayon de la partie non ronde de l'arbre rotatif à un endroit sans came, ou n'est que de 2 mm maximum, de préférence de 1,5 mm maximum, de manière particulièrement préférée de 1,0 mm maximum, en particulier de 0,5 mm maximum, plus longue que ce rayon.

7. Autocuiseur selon l'une quelconque des revendications précédentes, **caractérisé en ce que** l'élément d'étanchéité élastique (6) contient ou est constitué d'un matériau qui est choisi dans le groupe constitué par les élastomères.

8. Autocuiseur selon l'une quelconque des revendications précédentes, **caractérisé en ce que** l'élément d'étanchéité élastique (6) présente une rainure sur une surface perpendiculaire au fond de poignée, de préférence une rainure périphérique, dans lequel le fond de poignée s'engage de manière particulièrement préférée dans la rainure et fixe l'élément d'étanchéité élastique dans l'au moins une ouverture du fond de poignée.

9. Autocuiseur selon l'une quelconque des revendications précédentes, **caractérisé en ce que** l'élément d'étanchéité élastique (6) présente un évidement, de préférence un évidement circonférentiel, dans une zone entre un axe central de l'élément d'étanchéité élastique et la lèvre d'étanchéité.

10. Autocuiseur selon l'une quelconque des revendications précédentes, **caractérisé en ce que** l'élément d'étanchéité élastique (6) sans la lèvre d'étanchéité
i) présente dans une direction parallèle au fond de poignée une extension dans la plage de 1 à 4 cm ; et/ou
ii) présente dans une direction perpendiculaire au fond de poignée une extension dans la plage de 10 à 15 mm.

11. Autocuiseur selon l'une quelconque des revendications précédentes, **caractérisé en ce que** la lèvre d'étanchéité
i) présente dans une direction parallèle au fond de poignée (5) une extension dans la plage de 2 à 6 cm ; et/ou
ii) présente dans une direction perpendiculaire au fond de poignée une extension dans la plage de 10 à 18 mm.

12. Autocuiseur selon l'une quelconque des revendications précédentes, **caractérisé en ce que** la lèvre d'étanchéité (9) s'étend au moins par zones dans une direction
i) vers un axe central de l'élément d'étanchéité élastique ; et/ou
ii) s'étend en s'éloignant d'un axe central de l'élément d'étanchéité élastique ; et/ou
iii) s'étend parallèlement à un axe central de l'élément d'étanchéité élastique.

13. Autocuiseur selon l'une quelconque des revendications précédentes, **caractérisé en ce que** la lèvre d'étanchéité (9)
i) contient un matériau qui est choisi dans le groupe constitué par les élastomères ou en est constitué ; et/ou
ii) est monolithique par rapport à l'élément d'étanchéité élastique.

14. Autocuiseur selon l'une quelconque des revendications précédentes, **caractérisé en ce que** l'au moins une ouverture de la lèvre d'étanchéité, (9) de préférence toutes les ouvertures de la lèvre d'étanchéité, une surface d'ouverture dans la plage de 2 à <7,5 mm², de préférence de 4 à ≤ 7,2 mm², de manière particulièrement préférée de 5 à ≤ 7,0 mm², mieux encore de 5,5 à 6,8 mm², en particulier de 6,0 à 6,6 mm² à 6,2 à 6,4 mm².

15. Autocuiseur selon l'une quelconque des revendications précédentes, **caractérisé en ce que** la lèvre d'étanchéité (9) par l'intermédiaire de la au moins une ouverture fournit une résistance à l'écoulement si importante qu'une durée
i) d'au moins 10 secondes, de préférence au moins 20 secondes, de manière particulièrement préférée au moins 30 secondes, mieux encore au moins 40 secondes, en particulier au moins 50 secondes, est nécessaire pour faire chuter une pression de 1 bar de surpression à 0,04 bar de surpression dans l'autocuiseur ; et/ou
ii) de 2 minutes au maximum, de préférence 1,75 minutes au maximum, de manière particulièrement préférée 1,50 minutes au maximum, mieux encore 1,25 minutes au maximum, en particulier 1 minute au maximum, est nécessaire pour faire chuter une pression de 1 bar de surpression à 0,04 bar de surpression dans l'autocuiseur.
